# EUROPEAN PATENT SPECIFICATION

(11) **EP 3 708 921 B1**
(45) Date of publication and mention of the grant of the patent: **20.08.2025**
(21) Application number: 20162908.6
(22) Date of filing: 13.03.2020
(51) Int. Cl.: F24F 12/00

(54) **BUILDING WITH DEMAND-CONTROLLED HEAT EXCHANGE SYSTEM FOR VENTILATION, HEAT EXCHANGE VENTILATION SYSTEM AND HEAT EXCHANGE SYSTEM**
GEBÄUDE MIT BEDARFSGESTEUERTEM WÄRMEAUSTAUSCHSYSTEM ZUR BELÜFTUNG, WÄRMEAUSTAUSCHBELÜFTUNGSSYSTEM UND WÄRMEAUSTAUSCHSYSTEM
CONSTRUCTION AVEC SYSTÈME D'ÉCHANGE THERMIQUE À COMMANDE DE VENTILATION, SYSTÈME DE VENTILATION D'ÉCHANGE THERMIQUE ET SYSTÈME D'ÉCHANGE THERMIQUE

(30) Priority: 13.03.2019 NL 2022733
(43) Date of publication of application: 16.09.2020
(73) Proprietor: Vero Duco N.V., 8630 Veurne (BE)
(72) Inventor: Renson, Luc Louis, 8620 Nieuwpoort (BE); Vercoutter, Miguel Gabriel Roger, 8630 Veurne (BE); Tyvaert, Jurgen, 8400 Oostende (BE)
(74) Representative: Nederlandsch Octrooibureau

(56) References cited:
- EP-A2- 1 001 228
- EP-A2- 1 701 101
- WO-A1-2018/149425
- CN-A- 107 202 411
- US-A- 5 119 987
- US-A1- 2018 224 152

## Description

### Field of the Invention

The present invention relates to a heat exchange system for a heat exchange ventilation system for ventilating a building. The present invention further relates to a heat exchange ventilation system or a building comprising such a heat exchange system. The present invention further relates to a method for controlling such a heat exchange system.

### Background

For many years now, ventilation has been used to recover heat from air extracted from a room of a building by transferring heat from the extract air, ETA, to outdoor air, ODA, entering the building. Such ventilation systems typically comprise a heat exchanger at a crossing point of a first and second air passageway, each having an inlet and outlet, such that the first and second air passageway are in a heat-exchanging relationship to each other.

Depending on the installation configuration plan, a building requires a left- or right-sided ventilation unit. Traditionally, the different models may be recognized by the placing of the internal components and the supply air connection, which is situated on left side of the unit on an left-sided unit and on the right hand side on an right-sided unit. Typically, such a heat exchange system comprises a bypass in the air flow passage between the extract air connection and the exhaust air connection to allow the ETA to bypass the heat exchanger. As such, a left- or right-sided system may also be defined depending on the location of the extract air connection and the exhaust air connection. It is thus understood that manufacturing specific left- or right-sided ventilation systems increases the scale of production and the size of stock to manage on the manufacturer. Moreover, contractors may deviate from the predetermined plan which might require a different sided ventilation system to be used.

One solution has been to manufacture one-sided ventilation systems designed for one side of the building, and rebuild/convert said systems to be fitted on the opposite side by converting the direction of parts of the ventilation system, such as the air passageways and the heat exchanger. However, this requires a skilled installer and a lot of time, and gives no guarantees against any malfunctions, such as internal or external leaks. As such, the airtightness of the ventilation system will no longer meet the required or predetermined standards.

A heat exchange system for use in a building ventilation system according to the preamble of claim 1 is known from document US 5 119 987 A.

### Object of the Invention

An object of the invention may be to provide a heat exchange system which may be used as a left- or right-sided system without the need to rebuild or convert the configuration of the system.

Another object of the invention may be to provide a reliable heat exchange system which allows for providing simple installation and guaranteed reliability of the system.

Yet another object of the invention may be to provide an improved heat exchange system which allows for reducing production and/or storage costs.

Yet another object of the invention may be to provide a power efficient heat exchange system, which preferably requires less power to generate the same flow rate under the same external pressure.

### Summary of the Invention

The invention relates to a heat exchange system for use in a building as defined in claim 1.

The first flow passage further comprises a first bypass branch which is adapted to bypass the heat exchanger, and a first bypass flow regulator is located in the first bypass branch, e.g. at one of the ends of the bypass branch. As such, the first bypass flow regulator may be used to divide the flow between the first main branch and the first bypass branch, and to control the amount of heat exchanged between the first and second main branch by adjusting the flow rate through the first main branch. For example, if the temperature for instance in a room, due to external uncontrolled influences, rises or lowers to an undesirable temperature and the outside temperature is at a more desirable temperature than the temperature at the first, then the first bypass branch may be used to at least partially bypass the heat exchanger in order to prevent the supply of air at an undesirable temperature. Advantageously, the temperature of the air to be supplied, SUP, may be effectively controlled and, when bypassing the heat exchanger, less power is required from the booster since the air does not have to be sucked through the heat exchanger.

Furthermore, the second flow passage further comprises a second bypass branch which is adapted to bypass the heat exchanger, and a second bypass flow regulator is located in of the second bypass branch, e.g. at one of the ends of the bypass branch. As a result of the above configuration, the first and second flow passage are interchangeable. For example, the first flow passage may be used for allowing the flow of air from inside to outside the building and optionally bypassing the heat exchanger using the first bypass branch, or the second flow passage may be used for allowing the flow of air from inside to outside the building and optionally bypassing the heat exchanger using the second bypass branch. In another example, the first and second bypass branch are used simultaneously bypass the heat exchanger. As such, there will be no flow of air through the heat exchanger. Thus, no heat will be exchange between the flow of air from inside to outside the building and the flow of air from inside to outside the building.
Advantageously, by providing two bypass branches, the heat exchange system may be used in a left- or right-sided configuration without the need to rebuild or convert the system. Additionally, a reduction in the power consumption of the first and/or second boosters may be realized.

Alternatively, heat exchanger systems exist comprising a particular heat exchanger. Such a heat exchanger is for example described in document WO 2016/162738 A2. In the heat exchanger, the individual flow cross-section of flow passages of said plurality of first air flow passages in said parallel flow region and the individual flow cross-section of flow passages of said plurality of second air flow passages in said parallel flow region gradually, preferably linearly, decrease along a straight line perpendicular to the parallel air flow passages and from said first wall to said second wall of the block.
The previously mentioned document requires disabling the heat exchange function by partially blocking the inlet or outlet of the heat exchanger. However, it has been realized that such a ventilation system reduces the flow rate of air within the system under same external pressure. As a result, such a ventilation system requires higher power consumption to realize the same flow rate of air under the same external pressure.

In an embodiment of the invention, the housing may be provided with a control unit adapted to control the first bypass flow regulator in order to regulate the flow of air through the first bypass branch and/or adapted to control second bypass flow regulator in order to regulate the flow of air through the second bypass branch. For example, the control unit may be adapted to control a first/second bypass valve by opening or closing the valve. The bypass valve may be provided in an open, closed or intermediate position. Advantageously, the flow rate of air through and/or bypassing the heat exchanger may be efficiently controlled. In a preferred embodiment, the control unit is adapted to control the first bypass flow regulator and second bypass flow regulator.

In a second aspect according to the invention, optionally in combination with the other aspects described herein, the control unit may be adapted to control the first bypass flow regulator and/or the second bypass flow regulator on the basis of a sensor signal related to a measurement performed by a sensor. The sensor may be a temperature sensor, a pressure sensor, a vacuum sensor, or a particle size sensor.

In an embodiment of the invention, the control unit may be adapted to control the first bypass flow regulator on the basis of a first sensor signal related to a first measurement performed by a first sensor, and adapted to control the second bypass flow regulator on the basis of a second sensor signal related to a second measurement performed by a second sensor.

In another embodiment of the invention, the control unit may be adapted to control the first and second bypass flow regulator on the basis of the temperature of the air flowing through the first main air connection and the second secondary air connection or through the first and second bypass branch.

According to the invention, optionally in combination with the other aspects described herein, the control unit may be adapted to control the first bypass flow regulator and/or the second bypass flow regulator on the basis of a configurational setting related to the working configuration of the heat exchange system. In other words, the control unit controls at least one of the flow regulator based on a setting associated with the physical layout of the connections, e.g. a first setting may be associated with a layout in which a connection on the left side is adapted to provide supply air, SUP, during use and a first setting may be associated with a layout in which a connection on the right side is adapted to provide supply air, SUP, during use. The configurational setting is one of a configurational setting associated with a left-handed system and a configurational setting associated with a right-handed system.

Advantageously, the heat exchange system may be configured to work as for example a left- or right-sided system without requiring any rebuild or convert the configuration of the system. In a first configuration of the heat exchange system, the first bypass flow regulator is maintained in a closed position in order to prevent the flow of air through the first bypass branch. In a second configuration of the heat exchange system, the second bypass flow regulator is maintained in a closed position in order to prevent the flow of air through the second bypass branch. In a third configuration of the heat exchange system, the control unit is adapted to control the first bypass flow regulator on the basis of the position of the second bypass flow regulator and/or control the second bypass flow regulator on the basis of the state of the first bypass flow regulator.

In an embodiment of the invention, the control unit may be adapted to adjust the configurational setting of the heat exchange system on the basis of the temperature of the air flowing through the first main air connection and the second secondary air connection or through the first and second bypass branch.
Advantageously, the configurational setting may be adjusted based on the temperature of the air flowing in the heat exchange system. For example, by comparison of the temperature of the air flowing in the heat exchange system via the second secondary air connection, and the air flowing in the heat exchange system via the first main air connection, the source of the air may be determined: inside or outside the building. As such, the configurational setting may be adjusted on the basis of the determined air source of each flow passage.

In another embodiment of the invention, the control unit may be adapted to adjust the configurational setting of the heat exchange system on the basis of a user input or a user input signal related to the user input.

In a fourth aspect according to the invention, optionally in combination with the other aspects described herein, the housing may be provided with a user interface configured to allow communication between a user and the control unit. The user interface may display, indicate or otherwise communicate information to the user. For example, malfunctions of the system may be communicated to the user via error codes, light indicator, or other means through the user interface. As a result problem solving measures may be taken efficiently and in a timely manner by the user. Furthermore, maintenance/calibration checks may be performed through the user interface, thereby allowing for more efficient maintenance/calibration of the system.

In an embodiment of the invention, the user interface may be configured to display indicators representative of the configuration to of the heat exchange system. Advantageously, such an indication allows the user, for example an installer, to correctly and reliably install the system. Furthermore, this allows for simple maintenance checks of the system.

In another embodiment of the invention, the user interface may be configured to display indicators representative of the function of each connection, e.g. indicating which connection is to be used as the extract air, ETA, connection; exhaust air, EHA, connection; outdoor air, ODA, connection; or supply air, SUP, connection.

In a further embodiment of the invention, the housing may be provided with a first condensation drain and a second condensation drain. The first and second condensation drains may be provided on opposite sides of the heat exchange system to allow easy installation. Advantageously, the condensed air may be efficiently drained in any one of the left and right configurations. Preferably the user interface may be configured to display indicators representative of the function of each drain connection, e.g. indicating the drain connection to be connected to a drain duct and indicating the drain connection to be closed off. As a result, the user or installer may effectively collect condensed water from the correct condensation drain and store said water in a water storage unit to reuse the condensed water, or dispose of the said water.

In yet another embodiment of the invention, the user interface may be configured to allow the user to select or change the configurational setting related to the (working) configuration of the heat exchange system, which may be for example a left or right configuration. The user interface is provided for enabling at least one adjustable setting, i.e. the configurational setting, related to the heat exchange system to be manipulated in response to selections and/or inputs made by an operator according to the preferences of the operator. The preferred configuration may be for example be selected from a list of one or more predetermined settings which may be stored in a memory module.

In some embodiments, the housing may be provided with a filtering unit for filtering outside air before said air enters the housing which is located in the first flow passage and/or in the second flow passage. The filtering unit may be located in the first bypass branch of the first flow passage and/or in the second bypass branch of the second flow passage. Advantageously, the air flowing via the first bypass branch and/or the second bypass branch is filtered, resulting in filtered air that bypasses the heat exchanger.

In another aspect of the invention, there is provided a heat exchange ventilation system for use in a building comprising several rooms, a first secondary air duct and a second secondary air duct, a first main air duct and a second main air duct as well as a heat exchange system, preferably according to embodiments of the present invention. According to the heat exchange ventilation system, the first secondary air duct is connected to the first secondary air connection of the heat exchange system and to a room, the second secondary air duct is connected to the second secondary air connection of the heat exchange system and to a room, the said first main air duct is connected to the first main air connection and the second main air duct is connected to the second main air connection of the heat exchange system. Furthermore, the second flow passage further comprises a second bypass branch which is adapted to bypass the heat exchanger, and a second bypass flow regulator which is located in the second bypass branch.

In a yet another aspect of the invention, there is provided a building comprising several rooms, a first secondary air duct and a second secondary air duct, a first main air duct and a second main air duct as well as a heat exchange system, preferably according to embodiments of the present invention. According to the building, the first secondary air duct being connected to the first secondary air connection of the heat exchange system and to a room, said second secondary air duct being connected to the second secondary air connection of the heat exchange system and to a room, the first main air duct is connected to the first main air connection and said second main air duct is connected to the second main air connection of the heat exchange system. Furthermore, the second flow passage further comprises a second bypass branch which is adapted to bypass the heat exchanger, and a second bypass flow regulator which is located in the second bypass branch.

Advantageously, due to the circumstance that the actively controlled bypass flow regulators are positioned in the housing of the heat exchange system, there is no need to have such flow regulators in the rooms or zones of the building.

Further objectives, features and advantages of the heat exchange system according to the present invention will be apparent from the description below and the appended drawings. Objectives, features and advantages of the method of controlling described herein will also be apparent.

### Brief description of Drawings

The present invention will be explained in more detail below with reference to drawings in which illustrative embodiments thereof are shown. They are intended exclusively for illustrative purposes and not to restrict the inventive concept, which is defined by the appended claims.
Figure 1 shows a schematic view of a building with a heat exchange system according to the invention; and
Figures 2A and 2B show different cross-sections of a heat exchange system according to the invention.

### Detailed Description of Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention may operate in other sequences than described or illustrated herein.

Furthermore, the various embodiments, although referred to as "preferred" are to be construed as exemplary manners in which the disclosure may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

Different embodiments of the present invention will be described more fully hereinafter with reference to the enclosed drawings. The embodiments disclosed herein can, however, be realized in many different forms and should not be construed as being limited to the aspects set forth herein.

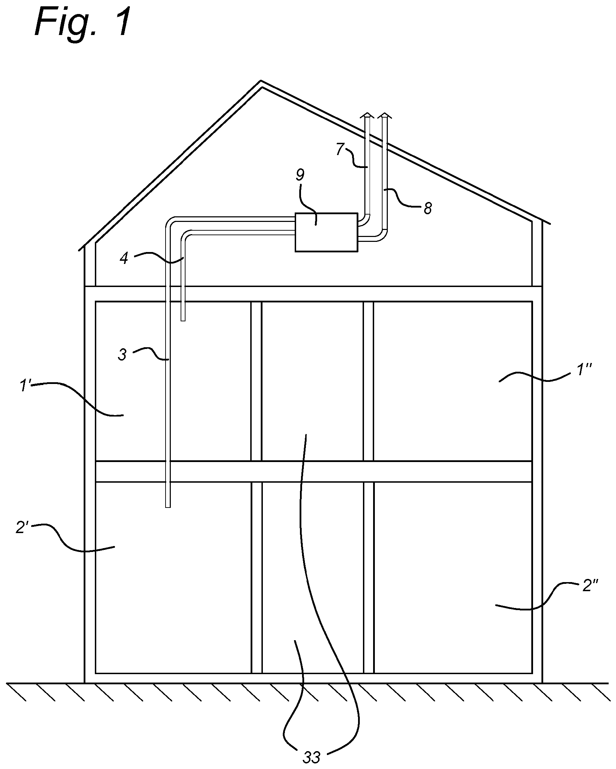

Fig. 1 shows a building comprising several, in this exemplary embodiment four, rooms 1', 1", 2', 2" and hall 33. The building further comprises a main air supply duct, provided in the form of a first main air duct 7, for supplying outdoor air, ODA, to an outdoor air connection of a heat exchange system 9 and a main air discharge duct, provided in the form of a second main air duct 8, for discharging exhaust air, EHA, to an exhaust air connection of the heat exchange system 9.
In a first configuration of the heat exchange system 9, the outdoor air connection is provided in the form of the first main air connection 10 and the exhaust air connection is provided in the form of the second main air connection 11. In a second configuration of the heat exchange system 9, the outdoor air connection is provided in the form of the second secondary air connection 14 and the exhaust air connection is provided in the form of the first secondary air connection 13.
Furthermore, the building further comprises a secondary air supply duct, provided in the form of a first secondary air duct 3, for supplying supply air, SUP, from a supply air connection of the heat exchange system to a room 1', 1", 2', 2'', and comprises a secondary air discharge duct, provided in the form of a second secondary air duct 4, for discharging extract air, ETA, from a room 1', 1'', 2', 2'' to an extract air connection of the heat exchange system. In embodiments, each one of the first and second secondary air ducts 3, 4 may be connected to one or more manifolds (not shown) to supply air to multiple rooms 1', 1", 2', 2'' and/or further to a hall 33. Each of the one or more manifolds may be connected to at least two branches, wherein each branch is connected to a respective room or hall.
In the first configuration of the heat exchange system 9, the supply air connection is provided in the form of the first secondary air connection 13 and the extract air connection is provided in the form of the second secondary air connection 14. In the second configuration of the heat exchange system 9, the supply air connection is provided in the form of the second main air connection 11 and the extract air connection is provided in the form of the first main air connection 10.

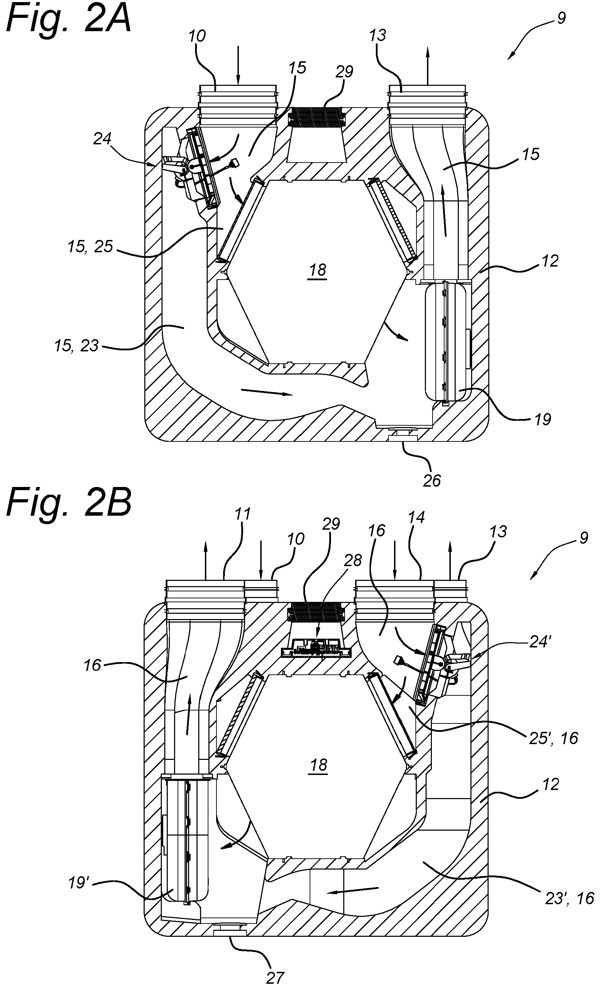

Figs. 2A and 2B show cross-sectional views of the heat exchange system 9. The heat exchange system 9 has a housing, designated as a whole as 12. The top side of the housing 12 is provided with a first main air connection 10 to which the first main air duct 7 is connectable and with a second main air connection 11 to which the second main air duct 8 is connectable. At the same side of the housing 12, a first and second secondary air connection 13, 14 are provided. The first secondary air duct 3 is connectable to the first secondary air connection 13 and the second secondary air duct 4 is connectable to the second secondary air connection 14.
A first flow passage 15 extends between the first main air connection 10 and the first secondary air connection 13. Correspondingly, a second flow passage 16 extends between the second secondary air connection 14 and the second main air connection 11. A heat exchanger, designated as a whole as 18, is provided in a first main branch 25 of said first flow passage 15 and a second main branch 16 of said second flow passage 16. The heat exchanger 18 ensures that thermal energy is exchanged between the air, e.g. ODA/SUP, flowing in the first main branch 25 and the air, e.g. ETA/EHA, flowing in the second main branch 25'. The air flow is ensured by means of two boosters, the first booster 19 is placed in the first flow passage 15 and the second booster 19' is placed in the second flow passage 16.

The first flow passage 15 further comprises a first bypass branch 23 which is adapted to bypass the heat exchanger 18, and a first bypass flow regulator 24 which is located in the first bypass branch 23, i.e. at the end of the first bypass branch 23. Correspondingly, the second flow passage 16 further comprises a second bypass branch 23' which is adapted to bypass the heat exchanger 18, and a second bypass flow regulator 24' which is located in the second bypass branch 23', i.e. at the end of the second bypass branch 23'.

As shown in Fig. 2A, the housing 12 is further provided with a first condensation drain 26, which is located at the side of the first secondary air connection 13, preferably at the side of the first booster 19. As shown in Fig. 2B, the housing 12 is further provided with a second condensation drain 27, which is located at the side of the second main air connection 11, preferably at the side of the second booster 19'.

As shown in Fig. 2B, the housing is provided with a control unit 28 configured to control the first and second bypass flow regulators, provided in the form of first and second bypass valves 24, 24', to regulate the flow through the respective bypass branch. For example, the control unit 28 may position the bypass valves in an open, closed or intermediate position. The control unit 28 may be electrically connected to the first and second bypass flow regulators 24, 24', wherein the control unit 28 transmits control signals to the first and second bypass flow regulators 24, 24'.

The control unit 28 is configured to adjust the heat exchange system 9 to a preferred configuration, i.e. at least a first and second configuration. In the first configuration of the heat exchange system, the first bypass flow regulator is maintained in a closed position in order to prevent the flow of air through the first bypass branch. In the second configuration of the heat exchange system the second bypass flow regulator is maintained in a closed position in order to prevent the flow of air through the second bypass branch. In the first and second configuration, the control unit 28 is adapted to control the respective other bypass flow regulator, i.e. the bypass flow regulator not maintained in a closed position, preferably based on a sensor measurement of for example a temperature, a pressure, or a particle size, or any other suitable parameter.

As shown in Figs. 2A and 2B, the housing 12 may further be provided with a user interface 29 configured to allow communication between a user and the control unit 28. The control unit 28 may be coupled to the user interface, which provides the control unit 28 with the ability to connect to mobile devices such as laptop computers, handheld computers, smart phones, etc. The control unit 28 may further be coupled to parts of the user interface, such as input and output means. The input means may be in the form of a keypad, touchscreen, button, or other inputting means capable of entering information to the control unit 28. The output may be a liquid crystal display, a light-emitting diode (LED) light or display, an optical LED (OLED), an active matrix OLED (AMOLED), or other output capable of rendering notifications, text and/or at least limited graphics from the control unit 28.

The user may through the user interface select between the first, second or other predetermined configurations of the heat exchange system 9. The control unit 28 is configured to receive a signal related to the selected configuration and adjust the heat exchange system 9 accordingly, by controlling the first and/or the second bypass flow regulators 24, 24'.

The user interface 29 may indicate the configuration to which the heat exchange system 9 is adjusted, particularly through the output, such as in the form of a notification, text, graphics, etc. The user interface may further indicate which one of the first and second condensation drains 26, 27 is to be used.

In embodiments according to the present invention, the control unit 28 may comprise a processing module (not shown) which is configured to gather one or more temperature measurements of the air flowing through the at least one of the first main air connection 10 and the second secondary air connection 14. The temperature of supplied air may be measured by one or more temperature sensors located at least in or at the end(s) of the first main air duct 7, the first main air connection 10, the first flow passage 15 or the first secondary air connection 13, preferably the end(s) of the first main air duct 7 and/or the first main air connection 10. Correspondingly, the temperature of discharged air may be measured by one or more temperature sensors located at least in or at the end(s) of the second main air duct 8, the second secondary air connection 14, the second flow passage 16 or the second main air connection 11, preferably the end(s) of the second main air duct 8 and/or the second secondary air connection 14.

In embodiments according to the present invention, the processing module may be further configured to gather one or more humidity measurements of the air flowing via the first and second flow passages 15, 16. The humidity of supplied air may be measured by one or more humidity sensors located at similar locations to the one or more temperature sensors used for measuring temperature of the supplied air, preferably the one or more humidity sensors are located at least at the site of the first condensation drain 26. Correspondingly, the humidity of discharged air may be measured by one or more humidity sensors located at similar locations to the one or more temperature sensors used for measuring temperature of the discharged air, preferably the one or more humidity sensors are located at least at the site of the second condensation drain 27.

These one or more temperature and/or humidity measurements may be stored in a memory module. The processing module may gather the one or more temperature and/or humidity measurements from the one or more sensors and/or the memory module. The processing module may further compute a first average temperature and/or humidity from the one or more temperature and/or humidity measurements of the supplied air and/or a second average temperature and/or humidity from the one or more temperature and/or humidity measurements of the discharged air.

The memory module may store data or commands received from or generated by the processing module or the user interface. The memory module may include an internal memory or an external memory. The internal memory may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one-time programmable ROM (OTPROM), a (electrically erasable and) programmable ROM (PROM), a flash memory, and the like). The external memory may include a flash drive, for example, a Compact Flash (CF), a Secure Digital (SD) a Micro Secure Digital (Micro-SD), a Mini Secure Digital (Mini-SD), an extreme Digital (xD), a memory stick or a storage medium (e.g. a hard drive). The external memory may be functionally connected to the control unit 28 through the user interface or other connecting interfaces.

The processing module may be further configured to determine whether each of the one or more temperature measurements or the average temperatures pass a predefined threshold. The processing module is further configured to, upon determining that the each of the one or more temperature measurements and/or the average temperatures pass the predefined threshold, send signals to the control unit 28 to perform an (in)action, which may be to at least partially open or close the first or second bypass flow regulators 24, 24'.

The step of determining whether each of the one or more temperature measurements and/or the average temperatures pass a predefined threshold may comprise computing a percentage difference between the predefined threshold and the one or more temperature measurements or the average temperatures. Furthermore, the control unit 28 may perform the (in)action directly related to the computed percentage difference. For example, a margin of 5% above or below the predefined threshold may be set to slightly open or close the first or second bypass flow regulator 24, 24', and a margin of 10% above or below the predefined threshold may be set to greatly open or close the first or second bypass flow regulator 24.

Furthermore, the processing module may be further configured to determine whether each of the one or more humidity measurements or the average humidity pass a predefined threshold. The processing module is further configured to, upon determining that the each of the one or more humidity measurements and/or the average humidity pass the predefined threshold, send signals to the control unit 28 to perform an (in)action, which may be to at least partially open or close the first or second drain regulators.

The one or more predefined thresholds may be stored in the memory module. The user may through the user interface select the one or more predefined thresholds. The user may further create a ventilation program for a pre-set period. Here the pre-set period may be hourly, daily, weekly, monthly, seasonally, and the like. For example, the user may set a higher temperature threshold for the winter season than for the summer season or the night than for the day.

In embodiments according to the invention, the housing 12 may be provided with a filtering unit for filtering outside air before said air enters the housing 12. The filtering unit may be located in the first flow passage 15 and/or in the second flow passage 16, preferably in or at the end(s) of the first bypass branch 23 of the first flow passage 15 and/or in or at the end(s) of the second bypass branch 23' of the second flow passage 16. Furthermore, a further filtering unit may be located in or at the end(s) of the first main branch 25 of the first flow passage 15 and/or in or at the end(s) of the second bypass branch 25' of the second flow passage 16. Alternatively, the further filtering unit may be located in or at the end(s) of the heat exchanger 18. The scope of the invention is limited only by the appended claims.

### List of reference signs

- 1', 1", 2', 2".: Room
- 3.: First secondary air duct
- 4.: Second secondary air duct
- 7.: First main air duct
- 8.: Second main air duct
- 9.: Heat exchange system
- 10.: First main air connection
- 11.: Second main air connection
- 12.: Housing of heat exchange system
- 13.: First secondary air connection
- 14.: Second secondary air connection
- 15.: First flow passage
- 16.: Second flow passage
- 18.: Heat exchanger
- 19.: First booster
- 19': Second booster
- 23.: First bypass branch
- 23'.: Second bypass branch
- 24.: First bypass flow regulator
- 24'.: Second bypass flow regulator
- 25.: First main branch
- 25'.: Second main branch
- 26.: First condensation drain
- 27.: Second condensation drain
- 28.: Control unit
- 29.: User Interface
- 33.: Hall

## Claims

1. Heat exchange system (9) for use in a building ventilation system, comprising a housing (12) which contains:
a first flow passage (15) having a first main air connection (10) at one end of the first flow passage, at the other end of which first flow passage a first secondary air connection (13) is located, a first booster (19) for ensuring the flow of air through the first secondary air connection (13) via the first flow passage (15) and the first main air connection (10),
a second flow passage (16) having a second main air connection (11) at one end of the second flow passage, at the other end of which second flow passage a second secondary air connection (14) is located,
a second booster (19') for ensuring the flow of air via the second main air connection (11), the second flow passage (16) and the second secondary air connection (14), and
a heat exchanger (18) by means of which at least a first main branch (25) of the first flow passage (15) and at least a second main branch (25') of the second flow passage (16) are in a heat-exchanging relationship to each other,
wherein the first flow passage (15) further comprises a first bypass branch (23) which is adapted to bypass the heat exchanger (18), and a first bypass flow regulator (24) which is located in the first bypass branch (23),
wherein the second flow passage (16) further comprises a second bypass branch (23') which is adapted to bypass the heat exchanger (18), and a second bypass flow regulator (24') which is located in the second bypass branch (23'),
**characterized in, that** the housing is provided with a control unit (28) adapted to control the first bypass flow regulator (24) in order to regulate the flow of air through the first bypass branch (23) and/or to control the second bypass flow regulator (24') in order to regulate the flow of air through the second bypass branch (23),
that the control unit (28) is adapted to control the first and/or second bypass flow regulator on the basis of a configurational setting associated with a left-handed system in which a connection on the left side is adapted to provide supply air (SUP) during use or a right-handed system in which a connection on the right side is adapted to provide supply air (SUP) during use, and
that said configurational setting is adjustable on the basis of a user input signal.

2. Heat exchange system (9) according to claim 1, wherein the control unit (28) is adapted to adjust the configurational setting on the basis of a user input signal.

3. Heat exchange system (9) according to any one of the preceding claims, wherein the housing (12) is provided with a user interface (29) configured to allow communication, e.g. user input, between a user and the control unit (28).

4. Heat exchange system (9) according to claim 3, wherein the user interface is configured to allow the user to select and/or change the configurational setting of the heat exchange system (9).

5. Heat exchange system (9) according to claim 3 or claim 4, wherein the user interface is configured to display indicators representative of the working configuration of the heat exchange system (9).

6. Heat exchange system (9) according to any one of claims 3-5, wherein the user interface is configured to display indicators representative of the function/type of each connection, e.g. to supply air to a room or to extract air from a room, such that a user is able to connect a duct with the same function/type to the connection.

7. Heat exchange system (9) according to any one of the preceding claims, wherein the control unit (28) is adapted to:
maintain the first bypass flow regulator (24) in a closed position in order to prevent the flow of air through the first bypass branch (23), when the value of the configuration setting is related to a first configuration of the heat exchange system (9), and
maintain the second bypass flow regulator (24') in a closed position in order to prevent the flow of air through the second bypass branch (23'), when the value of the configuration setting is related to a second configuration of the heat exchange system (9).

8. Heat exchange system (9) according to any one of the preceding claims, wherein the control unit (28) is adapted to, when the value of the configuration setting is related to a third configuration of the heat exchange system (9), control the first bypass flow regulator (24) on the basis of the state of the second bypass flow regulator (24') and/or control the second bypass flow regulator (24') on the basis of the state of the first bypass flow regulator (24).

9. Heat exchange system (9) according to any one of the preceding claims, wherein the control unit (28) is adapted to adjust the configurational setting on the basis of the temperature of the air flowing through the first main air connection and the second secondary air connection or through the first and second bypass branch.

10. Heat exchange ventilation system for use in a building comprising several rooms (1, 2), a first secondary air duct (3) and a second secondary air duct (4), a first main air duct (7) and a second main air duct (8) as well as a heat exchange system (9) according to any of the preceding claims,
said first secondary air duct (3) being connected to the first secondary air connection (13) of the heat exchange system (9) and to a room (1, 2), said second secondary air duct (4) being connected to the second secondary air connection (14) of the heat exchange system (9) and to a room (1, 2),
said first main air duct (7) being connected to the first main air connection (10) and said second main air duct (8) being connected to the second main air connection (11) of the heat exchange system (9).

11. Building comprising several rooms (1, 2), a first secondary air duct (3) and a second secondary air duct (4), a first main air duct (7) and a second main air duct (8) as well as a heat exchange system (9) according to any of the preceding claims 1-9,
said heat exchange system comprising a housing (12) which contains:
said first secondary air duct (3) being connected to the first secondary air connection (14) of the heat exchange system (9) and to a room (1, 2), said second secondary air duct (4) being connected to the second secondary air connection (14) of the heat exchange system (9) and to a room (1, 2),
said first main air duct (7) being connected to the first main air connection (10) and said second main air duct (8) being connected to the second main air connection (11) of the heat exchange system (9).

## Patentansprüche

1. Wärmeaustauschsystem (9) zur Verwendung in einem Gebäudebelüftungssystem, das ein Gehäuse (12) aufweist, das Folgendes enthält:
einen ersten Strömungskanal (15) mit einem ersten Hauptluftanschluss (10) an einem Ende des ersten Strömungskanals, wobei sich an dem anderen Ende des ersten Strömungskanals ein erster Sekundärluftanschluss (13) befindet,
einen ersten Booster (19) zum Gewährleisten der Luftströmung durch den ersten Sekundärluftanschluss (13) über den ersten Strömungskanal (15) und den ersten Hauptluftanschluss (10),
einen zweiten Strömungskanal (16) mit einem zweiten Hauptluftanschluss (11) an einem Ende des zweiten Strömungskanals, wobei sich an dem anderen Ende des zweiten Strömungskanals ein zweiter Sekundärluftanschluss (14) befindet,
einen zweiten Booster (19') zum Gewährleisten der Luftströmung über den zweiten Hauptluftanschluss (11), den zweiten Strömungskanal (16) und den zweiten Sekundärluftanschluss (14), und
einen Wärmetauscher (18), durch den mindestens ein erster Hauptzweig (25) des ersten Strömungskanals (15) und mindestens ein zweiter Hauptzweig (25') des zweiten Strömungskanals (16) in einer wärmetauschenden Beziehung zueinander stehen,
wobei der erste Strömungskanal (15) ferner einen ersten Bypass-Zweig (23), der angepasst ist, um den Wärmetauscher (18) zu umgehen, und einen ersten Bypass-Strömungsregler (24) aufweist, der sich in dem ersten Bypass-Zweig (23) befindet,
wobei der zweite Strömungskanal (16) ferner einen zweiten Bypass-Zweig (23'), der angepasst ist, um den Wärmetauscher (18) zu umgehen, und einen zweiten Bypass-Strömungsregler (24') aufweist, der sich in dem zweiten Bypass-Zweig (23') befindet,
**dadurch gekennzeichnet, dass** das Gehäuse mit einer Steuerungseinheit (28) versehen ist, die angepasst ist, um den ersten Bypass-Strömungsregler (24) zu steuern, um die Luftströmung durch den ersten Bypass-Zweig (23) zu regulieren, und/oder um den zweiten Bypass-Strömungsregler (24') zu steuern, um die Luftströmung durch den zweiten Bypass-Zweig (23) zu regulieren,
dass die Steuerungseinheit (28) angepasst ist, um den ersten und/oder zweiten Bypass-Strömungsregler auf der Grundlage einer Konfigurationseinstellung zu steuern, die einem linksseitigen System, bei dem ein Anschluss auf der linken Seite angepasst ist, um während der Verwendung Zuluft (SUP) bereitzustellen, oder einem rechtsseitigen System zugeordnet ist, bei dem ein Anschluss auf der rechten Seite angepasst ist, um während der Verwendung Zuluft (SUP) bereitzustellen, und
dass die Konfigurationseinstellung auf der Grundlage eines Benutzereingabesignals anpassbar ist.

2. Wärmeaustauschsystem (9) nach Anspruch 1, wobei die Steuerungseinheit (28) angepasst ist, um die Konfigurationseinstellung auf der Grundlage eines Benutzereingabesignals anzupassen.

3. Wärmeaustauschsystem (9) nach einem der vorhergehenden Ansprüche, wobei das Gehäuse (12) mit einer Benutzerschnittstelle (29) versehen ist, die konfiguriert ist, um eine Kommunikation, z. B. eine Benutzereingabe, zwischen einem Benutzer und der Steuerungseinheit (28) zu ermöglichen.

4. Wärmeaustauschsystem (9) nach Anspruch 3, wobei die Benutzerschnittstelle konfiguriert ist, um dem Benutzer zu ermöglichen, die Konfigurationseinstellung des Wärmeaustauschsystems (9) auszuwählen und/oder zu ändern.

5. Wärmeaustauschsystem (9) nach Anspruch 3 oder Anspruch 4, wobei die Benutzerschnittstelle konfiguriert ist, um Indikatoren anzuzeigen, die für die Arbeitskonfiguration des Wärmeaustauschsystems (9) repräsentativ sind.

6. Wärmeaustauschsystem (9) nach einem der Ansprüche 3 bis 5, wobei die Benutzerschnittstelle konfiguriert ist, um Indikatoren anzuzeigen, die für die Funktion/Art jedes Anschlusses, z. B. für Zuluft zu einem Raum oder für Abluft aus einem Raum, repräsentativ sind, sodass ein Benutzer in der Lage ist, einen Kanal mit der gleichen Funktion/Art an den Anschluss anzuschließen.

7. Wärmeaustauschsystem (9) nach einem der vorhergehenden Ansprüche, wobei die Steuerungseinheit (28) angepasst ist, um:
den ersten Bypass-Strömungsregler (24) in einer geschlossenen Position zu halten, um die Luftströmung durch den ersten Bypass-Zweig (23) zu verhindern, wenn der Wert der Konfigurationseinstellung mit einer ersten Konfiguration des Wärmeaustauschsystems (9) in Beziehung steht, und
den zweiten Bypass-Strömungsregler (24') in einer geschlossenen Position zu halten, um die Luftströmung durch den zweiten Bypass-Zweig (23') zu verhindern, wenn der Wert der Konfigurationseinstellung mit einer zweiten Konfiguration des Wärmeaustauschsystems (9) in Beziehung steht.

8. Wärmeaustauschsystem (9) nach einem der vorhergehenden Ansprüche, wobei die Steuerungseinheit (28) angepasst ist, um, wenn der Wert der Konfigurationseinstellung mit einer dritten Konfiguration des Wärmeaustauschsystems (9) in Beziehung steht, den ersten Bypass-Strömungsregler (24) auf der Grundlage des Zustands des zweiten Bypass-Strömungsreglers (24') zu steuern und/oder den zweiten Bypass-Strömungsregler (24') auf der Grundlage des Zustands des ersten Bypass-Strömungsreglers (24) zu steuern.

9. Wärmeaustauschsystem (9) nach einem der vorhergehenden Ansprüche, wobei die Steuerungseinheit (28) angepasst ist, die Konfigurationseinstellung auf der Grundlage der Temperatur der Luft anzupassen, die durch den ersten Hauptluftanschluss und den zweiten Sekundärluftanschluss oder durch den ersten und zweiten Bypass-Zweig strömt.

10. Wärmeaustauschlüftungssystem zur Verwendung in einem Gebäude, das mehrere Räume (1, 2), einen ersten Sekundärluftkanal (3) und einen zweiten Sekundärluftkanal (4), einen ersten Hauptluftkanal (7) und einen zweiten Hauptluftkanal (8) sowie ein Wärmeaustauschsystem (9) nach einem der vorhergehenden Ansprüche aufweist, wobei
der erste Sekundärluftkanal (3) mit dem ersten Sekundärluftanschluss (13) des Wärmeaustauschsystems (9) und mit einem Raum (1, 2) verbunden ist, wobei der zweite Sekundärluftkanal (4) mit dem zweiten Sekundärluftanschluss (14) des Wärmeaustauschsystems (9) und mit einem Raum (1, 2) verbunden ist, wobei der erste Hauptluftkanal (7) mit dem ersten Hauptluftanschluss (10) verbunden ist und der zweite Hauptluftkanal (8) mit dem zweiten Hauptluftanschluss (11) des Wärmeaustauschsystems (9) verbunden ist.

11. Gebäude, das mehrere Räume (1, 2), einen ersten Sekundärluftkanal (3) und einen zweiten Sekundärluftkanal (4), einen ersten Hauptluftkanal (7) und einen zweiten Hauptluftkanal (8) sowie ein Wärmeaustauschsystem (9) nach einem der vorhergehenden Ansprüche 1-9 aufweist, wobei
das Wärmeaustauschsystem ein Gehäuse (12) aufweist, das Folgendes enthält:
den ersten Sekundärluftkanal (3), der mit dem ersten Sekundärluftanschluss (14) des Wärmeaustauschsystems (9) und mit einem Raum (1, 2) verbunden ist, den zweiten Sekundärluftkanal (4), der mit dem zweiten Sekundärluftanschluss (14) des Wärmeaustauschsystems (9) und mit einem Raum (1, 2) verbunden ist, den ersten Hauptluftkanal (7), der mit dem ersten Hauptluftanschluss (10) verbunden ist und den zweiten Hauptluftkanal (8), der mit dem zweiten Hauptluftanschluss (11) des Wärmeaustauschsystems (9) verbunden ist.

## Revendications

1. Système d'échange thermique (9) pour l'utilisation dans un système de ventilation de construction, comprenant un boîtier (12) qui contient :
un premier passage de flux (15) ayant une première connexion principale (10) à une extrémité du premier passage de flux, et à l'autre extrémité du premier passage de flux est située une première connexion d'air secondaire (13),
un premier booster (19) pour assurer le flux d'air à travers la première connexion d'air secondaire (13) via le premier passage de flux (15) et la première connexion d'air principal (10) ;
un deuxième passage de flux (16) ayant une deuxième connexion d'air principal (11) à une extrémité du deuxième passage de flux, et à l'autre extrémité du deuxième passage de flux est située une deuxième connexion d'air secondaire (14),
un deuxième booster (19') pour assurer le flux d'air via la deuxième connexion d'air principal (11), le deuxième passage de flux (16) et la deuxième connexion d'air secondaire (14), et
un échangeur thermique (18) au moyen duquel au moins une première branche principale (25) du premier passage de flux (15) et au moins une deuxième branche principale (25') du deuxième passage de flux (16) sont en relation d'échange thermique l'une avec l'autre,
où le premier passage de flux (15) comprend en outre une première branche de dérivation (23) qui est adaptée pour contourner l'échangeur thermique (18), et un premier régulateur de flux de dérivation (24) qui est situé dans la première branche de dérivation (23),
où le deuxième passage de flux (16) comprend en outre une deuxième branche de dérivation (23') qui est adaptée pour contourner l'échangeur thermique (18), et un deuxième régulateur de flux de dérivation (24') qui est situé dans la deuxième branche de dérivation (23'),
**caractérisé en ce que** le boîtier est pourvu d'une unité de contrôle (28) adaptée pour contrôler le premier régulateur de flux de dérivation (24) afin de réguler le flux d'air à travers la première branche de dérivation (23) et/ou pour contrôler le deuxième régulateur de flux de dérivation (24') afin de réguler le flux d'air à travers la deuxième branche de dérivation (23),
**en ce que** l'unité de contrôle (28) est adaptée pour contrôler le premier et/ou le deuxième régulateur de flux de dérivation sur la base d'un paramètre de configuration associé à un système à gauche dans lequel une connexion sur le côté gauche est adaptée pour fournir de l'air d'alimentation (SUP) pendant l'utilisation ou un système à droite dans lequel une connexion sur le côté droit est adaptée pour fournir de l'air d'alimentation (SUP) pendant l'utilisation, et
**en ce que** ledit paramètre de configuration est réglable sur la base d'un signal d'entrée d'utilisateur.

2. Système d'échange thermique (9) selon la revendication 1, où l'unité de contrôle (28) est adaptée pour ajuster le paramètre de configuration sur la base d'un signal d'entrée d'utilisateur.

3. Système d'échange thermique (9) selon l'une quelconque des revendications précédentes, où le boîtier (12) est pourvu d'une interface utilisateur (29) configurée pour permettre la communication, par exemple l'entrée d'utilisateur, entre un utilisateur et l'unité de contrôle (28).

4. Système d'échange thermique (9) selon la revendication 3, où l'interface utilisateur est configurée pour permettre à l'utilisateur de sélectionner et/ou de modifier le paramètre de configuration du système d'échange thermique (9).

5. Système d'échange thermique (9) selon la revendication 3 ou la revendication 4, où l'interface utilisateur est configurée pour afficher des indicateurs représentatifs de la configuration de fonctionnement du système d'échange thermique (9).

6. Système d'échange thermique (9) selon l'une quelconque des revendications 3 à 5, où l'interface utilisateur est configurée pour afficher des indicateurs représentatifs de la fonction/ du type de chaque connexion, par exemple pour fournir de l'air à une pièce ou pour extraire de l'air d'une pièce, de sorte qu'un utilisateur peut connecter un conduit avec la même fonction/le même type à la connexion.

7. Système d'échange thermique (9) selon l'une quelconque des revendications précédentes, où l'unité de contrôle (28) est adaptée pour :
maintenir le premier régulateur de flux de dérivation (24) dans une position fermée afin d'empêcher le flux d'air à travers la première branche de dérivation (23), lorsque la valeur du paramètre de configuration est liée à une première configuration du système d'échange thermique (9), et
maintenir le deuxième régulateur de flux de dérivation (24') dans une position fermée afin d'empêcher le flux d'air à travers la deuxième branche de dérivation (23'), lorsque la valeur du paramètre de configuration est liée à une deuxième configuration du système d'échange thermique (9).

8. Système d'échange thermique (9) selon l'une quelconque des revendications précédentes, où l'unité de contrôle (28) est adaptée pour, lorsque la valeur du paramètre de configuration est liée à une troisième configuration du système d'échange thermique (9), contrôler le premier régulateur de flux de dérivation (24) sur la base de l'état du deuxième régulateur de flux de dérivation (24') et/ou contrôler le deuxième régulateur de flux de dérivation (24') sur la base de l'état du premier régulateur de flux de dérivation (24).

9. Système d'échange thermique (9) selon l'une quelconque des revendications précédentes, où l'unité de contrôle (28) est adaptée pour ajuster le paramètre de configuration sur la base de la température de l'air circulant à travers la première connexion d'air principal et la deuxième connexion d'air secondaire ou à travers la première et la deuxième branche de dérivation.

10. Système de ventilation d'échange thermique pour l'utilisation dans une construction comprenant plusieurs pièces (1, 2), un premier conduit d'air secondaire (3) et un deuxième conduit d'air secondaire (4), un premier conduit d'air principal (7) et un deuxième conduit d'air principal (8) ainsi qu'un système d'échange thermique (9) selon l'une quelconque des revendications précédentes,
ledit premier conduit d'air secondaire (3) étant connecté à la première connexion d'air secondaire (13) du système d'échange thermique (9) et à une pièce (1, 2), ledit deuxième conduit d'air secondaire (4) étant connecté à la deuxième connexion d'air secondaire (14) du système d'échange thermique (9) et à une pièce (1, 2),
ledit premier conduit d'air principal (7) étant connecté à la première connexion d'air principal (10) et ledit deuxième conduit d'air principal (8) étant connecté à la deuxième connexion d'air principal (11) du système d'échange thermique (9).

11. Construction comprenant plusieurs pièces (1, 2), un premier conduit d'air secondaire (3) et un deuxième conduit d'air secondaire (4), un premier conduit d'air principal (7) et un deuxième conduit d'air principal (8) ainsi qu'un système d'échange thermique (9) selon l'une quelconque des revendications précédentes 1 à 9,
ledit système d'échange thermique comprenant un boîtier (12) qui contient :
ledit premier conduit d'air secondaire (3) connecté à la première connexion d'air secondaire (14) du système d'échange thermique (9) et à une pièce (1, 2), ledit deuxième conduit d'air secondaire (4) connecté à la deuxième connexion d'air secondaire (14) du système d'échange thermique (9) et à une pièce (1, 2),
ledit premier conduit d'air principal (7) connecté à la première connexion d'air principal (10) et ledit deuxième conduit d'air principal (8) connecté à la deuxième connexion d'air principal (11) du système d'échange thermique (9).
